Europäisches Patentamt

European Patent Office

Office européen des brevets

(19)

(11) Veröffentlichungsnummer: **0 266 845**

**A2**

(12) # EUROPÄISCHE PATENTANMELDUNG

(21) Anmeldenummer: 87202125.8

(22) Anmeldetag: 04.11.87

(51) Int. Cl.⁴ **G01L 5/06**

(30) Priorität: 06.11.86 DE 3637922

(43) Veröffentlichungstag der Anmeldung:
11.05.88 Patentblatt 88/19

(84) Benannte Vertragsstaaten:
DE FR GB

(71) Anmelder: Philips Patentverwaltung GmbH
Wendenstrasse 35 Postfach 10 51 49
D-2000 Hamburg 1(DE)

(84) DE

(71) Anmelder: N.V. Philips' Gloeilampenfabrieken
Groenewoudseweg 1
NL-5621 BA Eindhoven(NL)

(84) FR GB

(72) Erfinder: Steinseifer, Dieter
Helsbachstrasse 28a
D-5900 Siegen 31(DE)

(74) Vertreter: Koch, Ingo, Dr.-Ing. et al
Philips Patentverwaltung GmbH
Wendenstrasse 35 Postfach 10 51 49
D-2000 Hamburg 1(DE)

(54) **Anordung zur Messung der Spannung von montierten Antriebsriemen.**

(57) Die Erfindung betrifft eine Anordnung zur Messung der Spannung von montierten Antriebsriemen-(2), insbesondere Zahnriemen, welche zwei Abstützelemente (3) aufweist. die einen Abschnitt des Antriebsriemens abstützen. und ferner einen Meßfühler (10). welcher im mittleren Bereich zwischen den Abstützelementen am Antriebsriemen anliegt und diesen in Richtung auf die gedachte Verbindungslinie der Abstützelemente auslenkt.

Damit unterschiedlich dicke Antriebsriemen (2) das Meßergebnis nicht verfälschen, sind die Abstützelemente (3) verschiebbar und mit einer Kraft gegen den Antriebsriemen gedrückt. die größer ist als die vom Meßfühler (10) aufgebrachte Gegenkraft. Zwei ortsfeste Anlageelemente (11) liegen den Abstützelementen (3) direkt gegenüber, so daß der Antriebsriemen (2) zwischen jeweils einem Abstützelement und dem dazugehörigen Anlageelement festliegt.

Xerox Copy Centre

EP 0 266 845 A2

## Anordnung zur Messung der Spannung von montierten Antriebsriemen

Die Erfindung bezieht sich auf eine Anordnung zur Messung der Spannung von montierten Antriebsriemen, insbesondere Zahnriemen, welche zwei Abstützelemente aufweist, die einen Abschnitt des Antriebsriemens zwischen sich abstützen, ferner einen Meßfühler, welcher im mittleren Bereich zwischen den Abstützelementen am Antriebsriemen anliegt und diesen in Richtung auf die gedachte Verbindungslinie der Abstützelemente auslenkt.

Aus der DE-PS 25 26 423 ist eine Anordnung der eingangs genannten Art bekannt, bei der die Abstützelemente ortsfest zur Meßanordnung sind. Dabei beeinflussen unterschiedliche Dicken der Antriebsriemen den Anlagepunkt des Meßfühlers am Riemen. Die durch Dickenunterschiede des Riemens verursachte Verschiebung des Anlagepunktes wird zusätzlich zu der durch Krafteinwirkung verursachten Auslenkung des Riemens mitgemessen und verfälscht damit das Meßergebnis.

Der Erfindung liegt die Aufgabe zugrunde, eine Meßanordnung der eingangs genannten Art so zu gestalten, daß unterschiedliche Dicken des Antriebsriemens keinen Einfluß auf das Meßergebnis haben.

Die Aufgabe wird erfindungsgemäß dadurch gelöst, daß die Abstützelemente verschiebbar und mit einer Kraft gegen den Antriebsriemen gedrückt sind, die größer ist, als die vom Meßfühler aufgebrachte Gegenkraft und daß zwei ortsfeste Anlageelemente den Abstützelementen direkt gegenüber liegen, so daß der Antriebsriemen zwischen jeweils einem Abstützelement und dem dazugehörigen Anlageelement festliegt.

Da die Anlageelemente und der Meßfühler auf der gleichen Seite des Antriebsriemens anliegen, haben unterschiedliche Dicken des Antriebsriemens keinen Einfluß auf das Meßergebnis.

Eine konstruktiv einfache Anordnung ergibt sich, wenn die Abstützelemente auf einem schwenkbaren Hebel angeordnet sind. Vorteilhaft ist der Hebel mittels einer Federkraft in Richtung auf den Antriebsriemen geschwenkt.

Bei einer wenig Einbauraum benötigenden Ausführungsart ist der Hebel einseitig an einen Halterahmen schwenkbar gelagert und trägt am freien Ende das Abstützelement.

Damit keine zusätzlichen Längskräfte von den Abstützelementen verursacht werden, sind diese vorteilhaft als drehbare Abstützrollen ausgebildet. Aus dem gleichen Grund können auch die Anlageelemente als drehbare Anlagerollen ausgebildet sein.

Der Meßfühler weist bei einer bevorzugten Ausführungsart der Erfindung eine einseitig eingespannte Blattfeder auf, an deren freiem Ende ein Kraftübertragungsglied befestigt ist, welches den Druck der Blattfeder auf den Antriebsriemen überträgt.

Um die Auslenkung des Meßfühlers zu verstärken, ist am freien Ende der Blattfeder in deren Verlängerungsrichtung ein Zeiger befestigt.

Damit zu locker oder zu fest gespannte Riemen leicht erkannt werden können, sind durch die Auslenkung des Meßfühlers betätigbare Grenzwertschalter vorgesehen, deren Positionen gemäß einer vorteilhaften Weiterbildung zur Einstellung verschiedener Toleranzgrenzen veränderbar sein können.

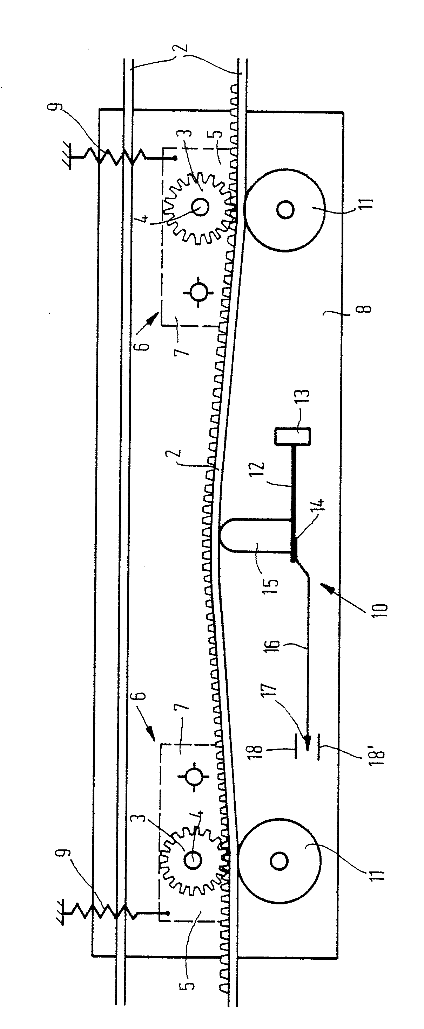

Ein Ausführungsbeispiel der Erfindung wird anhand der Zeichnung näher erläutert.

Die Figur zeigt eine Meßanordnung zur Messung der Spannung von montierten Antriebsriemen.

Ein Abschnitt des Zahnriemens 2 liegt auf den Abstützrollen 3, welche jeweils über eine Lagerachse 4 am schwenkbeweglichen Ende 5 eines einarmigen Hebels 6 befestigt sind. Dieser Hebel 6 ist mit seinem anderen Ende 7 am Halterahmen 8 gelagert. Zwei Analogrollen 11 liegen den Abstützrollen 3 direkt gegenüber und sind auf dem Halterahmen 8 drehbar gelagert. Der Riemen ist damit jeweils zwischen einer Anlagerolle 11 und einer Abstützrolle 3 festgelegt. Eine Druckfeder 9, die am schwenkbeweglichen Ende 5 des Hebels 6 angreift, bewirkt, daß die Abstützrolle 3 gegen den Antriebsriemen 2 mit einer Kraft drückt, die größer ist, als die von einem Meßfühler 10 verursachte Gegenkraft. Dadurch wird ein Anheben des Riemens 2 von den Anlagerollen 11 vermieden.

Das Kraftübertragungsglied 15 des Meßfühlers 10 liegt im mittleren Bereich zwischen den beiden Anlagerollen 11 an derselben Seite des Riemens 2 an und drückt diesen mit der Kraft einer Blattfeder 12 entsprechend der jeweiligen Spannung des Riemens 2 unterschiedlich stark durch. Die Blattfeder 12 ist an ihrem einen Ende 13 fest eingespannt. Am freien Ende 14 der Blattfeder 12 ist ein Zeiger 16 befestigt, der den relativ kleinen Auslenkungsweg des Zahnriemens 2 verstärkt anzeigt. Im Bereich des freien Endes 17 des Zeigers 16 befinden sich zwei jeweils für unterschiedliche Toleranzgrenzen einstellbare Grenzwertschalter 18 und 18'. Sobald das freie Ende 17 des Zeigers 16 einen der Grenzwertschalter 18 oder 18' berührt, wird ein elektrischer Kontakt hergestellt sowie ein Signal gebildet, welches eine zu feste bzw. zu lockere Spannung des Riemens 2 anzeigt. Eine Zeigerstellung zwischen den beiden Grenzwertschaltern 18 und 18' bedeutet. daß der Sollwert der Riemenspannung weder unzulässig über-noch unterschritten wird.

Bei unterschiedlichen Zahnriemendicken verschieben sich die Abstützrollen 3 entsprechend gegenüber den Anlagerollen 11. Für die Meßwertanzeige ist jedoch der ortsfeste Anlagepunkt an den Anlagerollen 11 maßgeblich.

Das im Ausführungsbeispiel dargestellte Funktionsprinzip des Meßfühlers, bei welchem die von einer vorgegebenen Federkraft bewirkte Auslenkung des Riemens gemessen wird. ist besonders einfach. Für die Erfindung ist jedoch auch ein Meßverfahren geeignet, welches - wie in der DE-PS 25 26 423 beschrieben - als Anzeige die bei vorgegebener Riemenauslenkung auftretende Reaktionskraft des Riemens anzeigt.

Weiterhin kann die Verschiebbarkeit der Antriebselemente auch mittels Schubstangenlagerung erreicht werden. Die Andruckkräfte können auch auf beliebige andere bekannte Weise, beispielsweise pneumatische, erzeugt werden.

## Ansprüche

1. Anordnung zur Messung der Spannung von montierten Antriebsriemen, insbesondere Zahnriemen, welche zwei Abstützelemente aufweist. die einen Abschnitt deAntriebsriemens abstützen, und ferner einen Meßfühler, welcher im mittleren Bereich zwischen den Abstützelementen am Antriebsriemen anliegt und diesen in Richtung auf die gedachte Verbindungslienie der Abstützelemente auslenkt. dadurch gekennzeichnet, daß die Abstützelemente (3) verschiebbar und mit einer Kraft gegen den Antriebsriemen (2) gedrückt sind, die größer ist als die vom Meßfühler (10) aufgebrachte Gegenkraft und daß zwei ortsfeste Anlageelemente (11) den Abstützelementen (3) direkt gegenüberliegen. so daß der Antriebsriemen (2) zwischen jeweils einem Abstützelement (3) und dem dazugehörigen Anlageelement (11) festliegt.

2. Meßanordnung nach Anspruch 1. dadurch gekennzeichnet. daß die Abstützelemente (3) auf einem schwenkbaren Hebel (6) angeordnet sind.

3. Meßanordnung nach Anspruch 2, dadurch gekennzeichnet , daß der Hebel (6) mittels einer Federkraft (9) in Richtung auf den Antriebsriemen (2) geschwenkt ist.

4. Meßanordnung nach Anspruch 2 oder 3. dadurch gekennzeichnet. daß der Hebel (6) einseitig an einem Halterahmen (8) schwenkbar gelagert ist und am freien Ende (5) das Abstützelement (3) trägt.

5. Meßanordnung nach einem der Ansprüche 1 bis 4. dadurch gekennzeichnet . daß die Abstützelemente als drehbare Abstützrollen (3) ausgebildet sind.

6. Meßanordnung nach einem der Ansprüche 1 bis 5, dadurchgekennzeichnet. daß die Anlageelemente als drehbare Anlagerollen (11) ausgebildet sind.

7. Meßanordnung nach einem der Ansprüche 1 bis 6, dadurch gekennzeichnet, daß der Meßfühler (10) eine einseitig eingespannte Blattfeder (12) aufweist, an deren freies Ende ein Kraftübertragungsglied (15) befestigt ist, welches den Druck der Blattfeder (12) auf den Antriebsriemen (2) überträgt.

8. Meßanordnung nach Anspruch 7. dadurch gekennzeichnet, daß am freien Ende (14) der Blattfeder (12) in deren Verlängerungsrichtung ein Zeiger (16) befestigt ist.

9. Meßanordnung nach einem der Ansprüche 1 bis 8. dadurch gekennzeichnet, daß durch die Auslenkung des Meßfühlers (10) betätigbare Grenzwertschalter (18,18') vorgesehen sind.

10. Meßanordnung nach Anspruch 9. dadurch gekennzeichnet. daß die Positionen der Grenzwertschalter (18.18') zur Einstellung verschiedener Toleranzgrenzen veränderbar sind.

0 266 845

9 9 3 6 6 4 7 5 2 7 3 5 2 2

2 18 17 16 15 12 13 14 8 11 11 18' 10

PHD 86-172